# EUROPÄISCHE PATENTSCHRIFT

(11) **EP 2 878 874 B1**
(45) Veröffentlichungstag und Bekanntmachung des Hinweises auf die Patenterteilung: **06.12.2017**
(21) Anmeldenummer: 14191040.6
(22) Anmeldetag: 30.10.2014
(51) Int. Cl.: F16L 55/035, F16L 55/033

(54) **Elastomerer Leitungsdämpfer**
Elastomeric pipe damper
Amortisseur en élastomère pour conduit

(30) Priorität: 29.11.2013 DE 102013113224
(43) Veröffentlichungstag der Anmeldung: 03.06.2015
(73) Patentinhaber: Poppe GmbH, 35392 Gießen (DE)
(72) Erfinder: Schmid, Norbert, 35415 Pohlheim (DE); Beckert, Johannes, 35647 Waldsolms (DE)
(74) Vertreter: Patentship Patentanwaltsgesellschaft mbH

(56) Entgegenhaltungen:
- EP-A1- 1 106 900
- EP-A2- 1 099 899
- WO-A1-2004/013534
- AU-A1- 2008 252 025
- US-A1- 2002 070 316

## Beschreibung

Die vorliegende Erfindung betrifft einen elastomeren Leitungsdämpfer zum Umschließen einer Rohrleitung.
Die Druckschrift EP 1 099 899 A2 beschreibt einen Schlauch zur Halterung von Rohrleitungen. Dieser Schlauch ist aus einem Vollmaterial hergestellt.

Die Druckschrift US 2002/0070316 A1 offenbart den Oberbegriff von Anspruch 1 und beschreibt eine akustische Rohrklemme mit einer extrudierten thermoplastischen Grundschicht und einer zweiten Schicht aus aufgeschäumten Material zur Aufnahme eines Stücks eines Rohrs.
Die Druckschrift WO 2004/013534 A1 beschreibt eine vibrationsdämpfende Rohrschelle mit einem aus zwei Hälften bestehenden metallischen Schellenkörper, auf dessen Innenseite ein poröses Elastomermaterial zum Anlegen an ein Rohr ausgebildet ist.
Die Druckschrift EP 1 106 900 A1 beschreibt eine vibrationsdämpfende Rohrschelle mit einer Schicht aus elastischem Material.
Die Druckschrift AU 2008252025 A1 beschreibt eine vibrationsdämpfende Rohrisolierung mit einem metallischen halbzylindrischen Grundkörper, auf dessen Innenseite eine Schicht aus extrudiertem Polymerschaum ausgebildet ist.
Es ist die der Erfindung zugrundeliegende Aufgabe, die Dämpfungseigenschaften eines elastomeren Leitungsdämpfers zu verbessern.
Diese Aufgabe wird durch den Gegenstand mit den Merkmalen nach dem unabhängigen Anspruch gelöst. Vorteilhafte Ausführungsformen der Erfindung sind Gegenstand der Figuren, der Beschreibung und der abhängigen Ansprüche.
Gemäß einem Aspekt der Erfindung wird die Aufgabe durch einen elastomeren Leitungsdämpfer mit einem Umfangsabschnitt zum Umschließen einer Rohrleitung und einem Zackenabschnitt mit Zacken zum Anlegen an die Rohrleitung gelöst, die an der Innenseite des Umfangsabschnittes angeordnet sind und aus einem porösen Elastomermaterial gebildet sind. Durch das poröse Elastomermaterial wird beispielsweise gegenüber einem Vollmaterial der technische Vorteil erreicht, dass dieses bessere Schwingungsdämpfungseigenschaften aufweist. Luft- und Körperschall können daher wirkungsvoll gedämmt werden. Zudem weist das poröse Elastomermaterial eine bessere Wärmeisolation auf. Bei der Herstellung des Leitungsdämpfers kann durch das Aufschäumen Rohmaterial eingespart werden. Erfindungsgemäß ist der Umfangsabschnitt aus einem porösen Elastomermaterial gebildet. Dadurch wird beispielsweise der technische Vorteil erreicht, dass sich die Dämpfungseigenschaften nochmals verbessern.
In einer weiteren vorteilhaften Ausführungsform des Leitungsdämpfers weist das poröse Elastomermaterial der Zacken eine Porengröße zwischen 20 µm und 150 µm auf. Dadurch wird beispielsweise der technische Vorteil erreicht, dass eine besonders effektive Dämpfung erreicht wird.

In einer weiteren vorteilhaften Ausführungsform des Leitungsdämpfers weist das poröse Elastomermaterial der Zacken eine Dichte zwischen 0,5 g/cm³ und 1,2 g/cm³ auf. Dadurch wird beispielsweise der technische Vorteil erreicht, dass das Elastomermaterial eine hohe Festigkeit aufweist.
In einer weiteren vorteilhaften Ausführungsform des Leitungsdämpfers umfasst das poröse Elastomermaterial der Zacken Metallpartikel oder keramische Anteile zum Erhöhen einer thermischen Leitfähigkeit. Dadurch wird beispielsweise der technische Vorteil erreicht, dass Wärme von der Rohrleitung abgeführt werden kann. Erfindungsgemäß ist die Porengröße des porösen Elastomermaterials in den Zacken größer als die Porengröße des porösen Elastomermaterials in dem Umfangsabschnitt. Dadurch wird beispielsweise der technische Vorteil erreicht, dass in den Zacken bessere Dämpfungseigenschaften erzielt werden, während in dem Umfangsabschnitt eine höhere Stabilität erreicht wird. Erfindungsgemäß sind der Umfangsabschnitt aus einem ersten porösen Elastomermaterial und die Zacken aus einem zweiten porösen Elastomermaterial gebildet. Dadurch wird beispielsweise der technische Vorteil erreicht, dass die positiven Eigenschaften unterschiedlicher Elastomermaterialien miteinander kombiniert werden.
In einer weiteren vorteilhaften Ausführungsform des Leitungsdämpfers umfasst das poröse Elastomermaterial der Zacken Ethylen-Propylen-Dien-Kautschuk (EPDM). Dadurch wird beispielsweise der technische Vorteil erreicht, dass ein Material mit besonders guten Dämpfungs- und Festigkeitseigenschaften verwendet wird.
In einer weiteren vorteilhaften Ausführungsform des Leitungsdämpfers umfasst der Zackenabschnitt erste Zacken mit einer ersten Porengröße und zweite Zacken mit einer zweiten Porengröße. Dadurch wird beispielsweise der technische Vorteil erreicht, dass Zacken mit unterschiedlichen Dämpfungseigenschaften realisiert werden.

In einer weiteren vorteilhaften Ausführungsform des Leitungsdämpfers umfasst der Zackenabschnitt erste Zacken und zweite Zacken aus unterschiedlichen porösen Elastomermaterialien. Dadurch wird beispielsweise ebenfalls der technische Vorteil erreicht, dass Zacken mit unterschiedlichen Dämpfungseigenschaften realisiert werden.
In einer weiteren vorteilhaften Ausführungsform des Leitungsdämpfers umfasst der Umfangsabschnitt einen Verschlussabschnitt zum Schließen des Umfangsabschnittes um die Rohrleitung. Dadurch wird beispielsweise der technische Vorteil erreicht, dass der Leitungsdämpfer an einer beliebigen Stelle um die Rohrleitung umlegbar ist.
In einer weiteren vorteilhaften Ausführungsform des Leitungsdämpfers ist der Verschlussabschnitt aus einem elastomeren Vollmaterial gebildet. Dadurch wird beispielsweise der technische Vorteil erreicht, dass sich die Festigkeit des Verschlussabschnittes erhöht.
In einer weiteren vorteilhaften Ausführungsform des Leitungsdämpfers ist das elastomere Vollmaterial Ethylen-Propylen-Dien-Kautschuk (EPDM). Dadurch wird beispielsweise der technische Vorteil erreicht, dass der Verschlussabschnitt eine hohe Festigkeit aufweist.
In einer weiteren vorteilhaften Ausführungsform des Leitungsdämpfers ist der Umfangsabschnitt ringförmig geschlossen. Dadurch wird beispielsweise der technische Vorteil erreicht, dass sich der Leitungsdämpfer nicht von der Rohrleitung lösen kann.
In einer weiteren vorteilhaften Ausführungsform des Leitungsdämpfers sind die Zacken im Querschnitt dreiecksförmig, rechteckförmig oder trapezförmig. Dadurch wird beispielsweise der technische Vorteil erreicht, dass in Verbindung mit dem porösen Elastomermaterial besonders gute Dämpfungseigenschaften erzielt werden.
Ausführungsbeispiele der Erfindung sind in den Zeichnungen dargestellt und werden im Folgenden näher beschrieben.
Es zeigen:
Fig. 1 eine Ansicht eines geschlossenen Leitungsdämpfers;
Fig. 2 eine vergrößerte Ansicht des Leitungsdämpfers; und
Fig. 3 eine Ansicht eines weiteren Leitungsdämpfers im geöffneten Zustand.

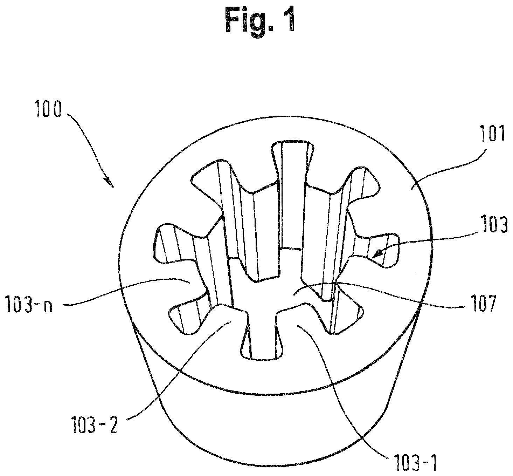

Fig. 1 zeigt eine Ansicht eines geschlossenen elastomeren Leitungsdämpfers 100, der einen Zackenring bildet. Der elastomere Leitungsdämpfer 100 umfasst einen ringförmig geschlossenen Umfangsabschnitt 101. An der Innenseite des Umfangsabschnitts 101 ist ein Zackenabschnitt 103 mit stegartig vorspringenden Zacken 103-1, 103-2, ...,103-n gebildet.
Die Zacken 103-1, 103-2, ...,103-n bilden eine Zahnung an der Innenseite des Umfangsabschnitts 101 und dienen zum Abfangen von Stößen und Schwingungen einer eingesetzten Rohrleitung.
Im Inneren des Leitungsdämpfers 100 befindet sich eine Öffnung 107, in die die Rohrleitung eingeschoben wird. Die Zacken 103-1, 103-2, ...,103-n des Zackenabschnittes 103 legen sich dabei an die Rohrleitung an, so dass der Leitungsdämpfer 100 an der Rohrleitung gehalten wird. Die Zacken 103-1, 103-2, ...,103-n komprimieren sich beim Einschieben der Rohrleitung in den elastomeren Leitungsdämpfer 100.

Die Zacken 103-1, 103-2, ...,103-n und der Umfangsabschnitt 101 sind aus Elastomermaterialien mit Mikroporen gebildet, so dass die Zacken 103-1, 103-2, ...,103-n gute mechanische Dämpfungseigenschaften aufweisen. Poröses Elastomermaterial weist gegenüber einem Vollmaterial einen Gewichtsvorteil und bessere Schwingungsdämpfungseigenschaften auf. Zudem weist poröses Elastomermaterial gegenüber dem Vollmaterial eine bessere Wärmeisolation auf.
Der elastomere Leitungsdämpfer 100 kann als Dämpfungselement oder als Klapperschutz für Leitungen und Leitungssysteme verwendet werden. Der elastomere Leitungsdämpfer 100 weist in diesen Anwendungen eine Funktion als Schutz-, Dämpfungs- und Bündelungselement auf Rohrleitungen in unterschiedlicher Ausführung und aus unterschiedlichen Werkstoffen auf.

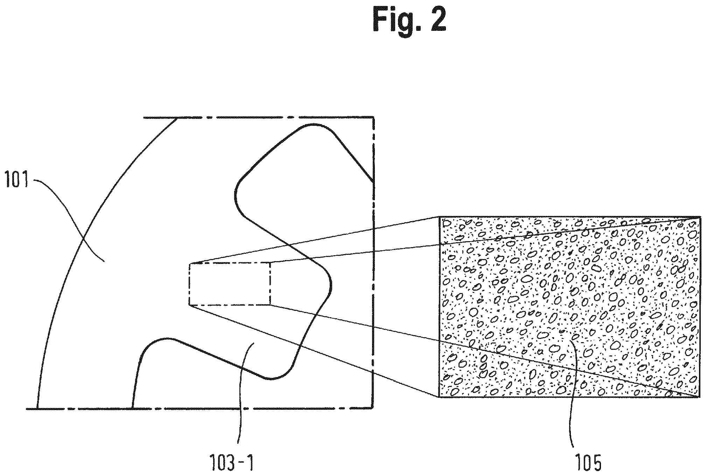

Fig. 2 zeigt eine vergrößerte Ansicht des Leitungsdämpfers 100 mit dem Umfangsabschnitt 101 und der Zacke 103-1. Das poröse Elastomermaterial 105, aus dem die Zacke 103-1 gebildet ist, weist beispielsweise eine Porengröße zwischen 20 µm und 150 µm und eine Dichte zwischen 0,5 g/cm³ und 1,2 g/cm³ auf. Das poröse Elastomermaterial 105 kann durch Aufschäumen eines Elastomermaterials 105 mittels eines Treibmittels oder durch chemisches oder physikalisches Schäumen hergestellt werden. Als Elastomermaterial kann beispielsweise Ethylen-Propylen-Dien-Kautschuk (EPDM) oder Nitrilkautschuk (NBR) verwendet werden. Im Allgemeinen können auch andere geeignete Elastomere verwendet werden. Durch das Aufschäumen wird erreicht, dass die Bauteildichte kleiner als die Rohdichte des Ausgangsmaterials wird.
Die Porengröße des porösen Elastomermaterial 105 kann in unterschiedlichen Bereichen des Leitungsdämpfers 100 variieren, so dass je nach Anforderung über die Porengröße unterschiedliche Eigenschaften des porösen Elastomermaterials 105 eingestellt werden können. Die Porengröße des porösen Elastomermaterials 105 in den Zacken 103-1, 103-2, ...,103-n ist größer als die Porengröße in dem Umfangsabschnitt 101. Dadurch lassen sich die Dämpfungseigenschaften der Zacken 103-1, 103-2, ...,103-n verbessern und die Belastbarkeit des Umfangsabschnitts 101 erhöhen. Der Zackenabschnitt 103 kann beispielsweise Zacken 103-1 mit einer ersten Porengröße und Zacken 103-2 mit einer zweiten Porengröße umfassen, die zudem aus unterschiedlichen porösen Elastomermaterialien gebildet sein können.

Außerdem sind der Umfangsabschnitt 101 und die Zacken 103-1, 103-2, ...,103-n aus unterschiedlichen porösen Elastomermaterialien gebildet. Zudem kann das poröse Elastomermaterial 105 Metallpartikel, wie beispielsweise Kupfer, oder keramische Substanzen zum Erhöhen einer thermischen Leitfähigkeit umfassen, so dass Wärme der Rohrleitung abgeführt werden kann, falls dies erforderlich sein sollte.

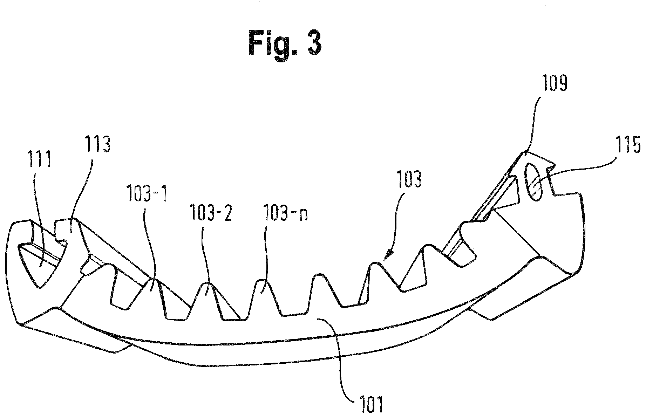

Fig. 3 zeigt eine Ansicht eines Leitungsdämpfers 100, dessen Umfangsabschnitt 101 nicht geschlossen ist und der einen Clip-Zackenring bildet. An dem einen Ende des Umfangsabschnittes 101 ist ein Widerhaken 109 gebildet und an dem anderen Ende des Umfangsabschnittes 101 ist eine Aufnahmeöffnung 111 zum Einsetzen und Aufnehmen des Widerhakens 109 gebildet. Dadurch entsteht ein integraler, einstückiger Verschlussabschnitt 113 in dem Umfangsabschnitt 101, der es erlaubt, dass der Leitungsdämpfer 100 an beliebigen Stellen auf die Rohrleitung aufgesetzt und verschlossen werden kann. Beim Schließen des Leitungsdämpfers 100 wird der Widerhaken 109 in die Aufnahmeöffnung 111 gedrückt. Dadurch werden die Zacken 103-1, 103-2, ...,103-n an die Rohrleitung angelegt und komprimiert. In diesem Fall wird der Leitungsdämpfer 100 nicht entlang der Rohrleitung verschoben, sondern an einer vorgesehenen Stelle angelegt.

Der Widerhaken 109 und die schlitzförmige Aufnahmeöffnung 111 sind aus einem harten elastomeren Vollmaterial ohne Poren gebildet, um eine ausreichende Festigkeit des Verschlussabschnittes 113 sicherzustellen. Der hohle Widerhaken 109 umfasst eine Öffnung 115, durch die die Elastizität des Widerhakens 109 im Einsatzbereich erhöht wird. Die Zacken 103-1, 103-2, ...,103-n sind dagegen aus einem porösen Elastomermaterial 105 hergestellt und dienen auch in diesem Fall zum Dämpfen von Schwingungen der eingesetzten Rohrleitung. Die Zacken 103-1, 103-2, ...,103-n sind im Querschnitt dreiecksförmig mit gleichen Seiten. Im Allgemeinen können die Zacken jedoch eine beliebige Form aufweisen.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Leitungsdämpfer
- 101: Umfangsabschnitt
- 103: Zackenabschnitt
- 103-1: Zacken
- 103-2: Zacken
- 103-n: Zacken
- 105: Elastomermaterial
- 107: Öffnung
- 109: Widerhaken
- 111: Aufnahmeöffnung
- 113: Verschlussabschnitt
- 115: Öffnung

## Patentansprüche

1. Elastomerer Leitungsdämpfer (100) mit einem Umfangsabschnitt (101) zum Umschließen einer Rohrleitung und einem Zackenabschnitt (103) mit Zacken (103-1, 103-2, ...,103-n) zum Anlegen an die Rohrleitung, die an der Innenseite des Umfangsabschnittes (101) angeordnet sind und die aus einem porösen Elastomermaterial (105) gebildet sind, **dadurch gekennzeichnet, dass** der Umfangsabschnitt (101) aus einem ersten porösen Elastomermaterial und die Zacken (103-1, 103-2, ...,103-n) aus einem zweiten porösen Elastomermaterial gebildet sind, wobei die Porengröße des porösen Elastomermaterials (105) in den Zacken (103-1, 103-2, ...,103-n) größer als die Porengröße in dem Umfangsabschnitt (101) ist.

2. Elastomerer Leitungsdämpfer (100) nach Anspruch 1, wobei das poröse Elastomermaterial (105) der Zacken (103-1, 103-2, ...,103-n) eine Porengröße zwischen 20 µm und 150 µm aufweist.

3. Elastomerer Leitungsdämpfer (100) nach einem der vorangehenden Ansprüche, wobei das poröse Elastomermaterial (105) der Zacken (103-1, 103-2, ...,103-n) eine Dichte zwischen 0,5 g/cm³ und 1,2 g/cm³ aufweist.

4. Elastomerer Leitungsdämpfer (100) nach einem der vorangehenden Ansprüche, wobei das poröse Elastomermaterial (105) der Zacken (103-1, 103-2, ...,103-n) Metallpartikel oder keramische Anteile zum Erhöhen einer thermischen Leitfähigkeit umfasst.

5. Elastomerer Leitungsdämpfer (100) nach einem der vorangehenden Ansprüche, wobei das poröse Elastomermaterial der Zacken (103-1, 103-2, ...,103-n) Ethylen-Propylen-Dien-Kautschuk (EPDM) oder Nitrilkautschuk (NBR) umfasst.

6. Elastomerer Leitungsdämpfer (100) nach einem der vorangehenden Ansprüche, wobei der Zackenabschnitt (103) erste Zacken (103-1) mit einer ersten Porengröße und zweite Zacken (103-2) mit einer zweiten Porengröße umfasst.

7. Elastomerer Leitungsdämpfer (100) nach einem der vorangehenden Ansprüche, wobei der Zackenabschnitt (103) erste Zacken (103-1) und zweite Zacken (103-2) umfasst, welche aus unterschiedlichen porösen Elastomermaterialien gebildet sind.

8. Elastomerer Leitungsdämpfer (100) nach einem der vorangehenden Ansprüche, wobei der Umfangsabschnitt (101) einen Verschlussabschnitt (113) zum Schließen des Umfangsabschnittes (101) um die Rohrleitung umfasst.

9. Elastomerer Leitungsdämpfer (100) nach Anspruch 8, wobei der Verschlussabschnitt (113) aus einem elastomeren Vollmaterial gebildet ist.

10. Elastomerer Leitungsdämpfer (100) nach Anspruch 9, wobei das elastomere Vollmaterial Ethylen-Propylen-Dien-Kautschuk (EPDM) ist.

11. Elastomerer Leitungsdämpfer (100) nach einem der vorangehenden Ansprüche, wobei der Umfangsabschnitt (101) ringförmig geschlossen ist.

12. Elastomerer Leitungsdämpfer (100) nach einem der vorangehenden Ansprüche, wobei die Zacken (103-1, 103-2, ...,103-n) im Querschnitt dreiecksförmig, rechteckförmig oder trapezförmig sind.

## Claims

1. Elastomeric pipe damper (100) comprising a circumferential section (101) for enclosing a pipeline and a toothed section (103) with teeth (103-1, 103-2, ..., 103-n) for placing onto the pipeline, which are arranged on the inner side of the circumferential section (101) and are formed of a porous elastomer material (105), **characterized in that** the circumferential section (101) is formed of a first porous elastomer material and the teeth (103-1, 103-2, ..., 103-n) are formed of a second porous elastomer material, wherein the pore size of the porous elastomer material (105) in the teeth (103-1, 103-2, ..., 103-n) is larger than the pore size in the circumferential section (101).

2. Elastomeric pipe damper (100) according to claim 1, wherein the porous elastomer material (105) of the teeth (103-1, 103-2, ..., 103-n) comprises a pore size between 20 µm and 150 µm.

3. Elastomeric pipe damper (100) according to any one of the preceding claims, wherein the porous elastomer material (105) of the teeth (103-1, 103-2, ..., 103-n) comprises a density between 0.5 g/cm³ and 1.2 g/cm³.

4. Elastomeric pipe damper (100) according to any one of the preceding claims, wherein the porous elastomer material (105) of the teeth (103-1, 103-2, ..., 103-n) comprises metal particles or ceramic portions for increasing a thermal conductivity.

5. Elastomeric pipe damper (100) according to any one of the preceding claims, wherein the porous elastomer material of the teeth (103-1, 103-2, ..., 103-n) comprises ethylene-propylene-diene rubber (EPDM) or nitrile rubber (NBR).

6. Elastomeric pipe damper (100) according to any one of the preceding claims, wherein the toothed section (103) comprises first teeth (103-1) comprising a first pore size and second teeth (103-2) comprising a second pore size.

7. Elastomeric pipe damper (100) according to any one of the preceding claims, wherein the toothed section (103) comprises first teeth (103-1) and second teeth (103-2), which are formed of different porous elastomer materials.

8. Elastomeric pipe damper (100) according to any one of the preceding claims, wherein the circumferential section (101) comprises a closure section (113) for closing the circumferential section (101) around the pipeline.

9. Elastomeric pipe damper (100) according to claim 8, wherein the closure section (113) is formed of an elastomeric solid material.

10. Elastomeric pipe damper (100) according to claim 9, wherein the elastomeric solid material is ethylene-propylene-diene rubber (EPDM).

11. Elastomeric pipe damper (100) according to any one of the preceding claims, wherein the circumferential section (101) is closed in a ring shape.

12. Elastomeric pipe damper (100) according to any one of the preceding claims, wherein the teeth (103-1, 103-2, ..., 103-n) are triangular, rectangular or trapezoidal in cross section.

## Revendications

1. Amortisseur en élastomère pour un conduit (100) comportant une section périphérique (101) pour entourer un conduit de tubulure et une section à dentelures (103) comportant des dentelures (103-1, 103-2, ..., 103-n) pour l'application au conduit de tubulure, qui sont disposées dans la partie interne de la section périphérique (101) et qui sont formées à partir d'un matériau élastomère poreux (105), **caractérise en ce que** la section périphérique (101) est formée à partir d'un premier matériau élastomère poreux et les dentelures (103-1, 103-2, ..., 103-n) sont formées à partir d'un deuxième matériau élastomère poreux, dans lequel la taille des pores du matériau élastomère poreux (105) dans les dentelures (103-1, 103-2, ..., 103-n) est plus grande que la taille des pores dans la section périphérique (101).

2. Amortisseur en élastomère pour un conduit (100) selon la revendication 1, dans lequel le matériau élastomère poreux (105) des dentelures (103-1, 103-2, ..., 103-n) présente une taille des pores entre 20 µm et 150 µm.

3. Amortisseur en élastomère pour un conduit (100) selon l'une des revendications précédentes, dans lequel le matériau élastomère poreux (105) des dentelures (103-1, 103-2, ..., 103-n) présente une densité entre 0,5 g/cm³ et 1,2 g/cm³.

4. Amortisseur en élastomère pour un conduit (100) selon l'une des revendications précédentes, dans lequel le matériau élastomère poreux (105) des dentelures (103-1, 103-2, ..., 103-n) comporte des particules métalliques ou des parties céramiques pour augmenter une conductivité thermique.

5. Amortisseur en élastomère pour un conduit (100) selon l'une des revendications précédentes, dans lequel le matériau élastomère poreux des dentelures (103-1, 103-2, ..., 103-n) comporte éthylène propylène diène caoutchouc (EPDM) ou caoutchouc nitrile (NBR).

6. Amortisseur en élastomère pour un conduit (100) selon l'une des revendications précédentes, dans lequel la section à dentelures (103) comporte des premières dentelures (103-1) ayant une première taille de pores et des deuxièmes dentelures (103-2) ayant une deuxième taille de pores.

7. Amortisseur en élastomère pour un conduit (100) selon l'une des revendications précédentes, dans lequel la section à dentelures (103) comporte des premières dentelures (103-1) et des deuxièmes dentelures (103-2) qui sont formées à partir de matériaux élastomères poreux différents.

8. Amortisseur en élastomère pour un conduit (100) selon l'une des revendications précédentes, dans lequel la section périphérique (101) comporte une section de fermeture (113) pour fermer la section périphérique (101) autour du conduit de tubulure.

9. Amortisseur en élastomère pour un conduit (100) selon la revendication 8, dans lequel la section de fermeture (113) est formée à partir d'un matériau plein élastomère.

10. Amortisseur en élastomère pour un conduit (100) selon la revendication 9, dans lequel le matériau plein élastomère est un éthylène propylène diène caoutchouc (EPDM).

11. Amortisseur en élastomère pour un conduit (100) selon l'une des revendications précédentes, dans lequel la section périphérique (101) est fermée de façon annulaire.

12. Amortisseur en élastomère pour un conduit (100) selon l'une des revendications précédentes, dans lequel les dentelures (103-1, 103-2, ..., 103-n) ont une section en forme de triangle, rectangle ou trapèze.
